# EUROPEAN PATENT APPLICATION

(11) **EP 1 499 112 A2**
(43) Date of publication of application: **19.01.2005**
(21) Application number: 04368048.7
(22) Date of filing: 13.07.2004
(51) Int. Cl.: H04N 3/15

(54) **Pixel with variable resolution during exposure**

(30) Priority: 14.07.2003 US 619240
(71) Applicant: Dialog Semiconductor, Clinton, New Jersey 08809 (US)
(72) Inventor: McCaffrey, Nathaniel Joseph, Hunterdon New Jersey 08559 (US)
(74) Representative: Schuffenecker, Thierry

(57) **Abstract**

A variable resolution imager and method of forming output signals from a variable resolution imager are described. An imager having a number of pixels is provided. The variable resolution imager is accomplished by binning selected groups of pixels in various sections of the imager together, thereby forming regions of variable resolution. The larger the number of pixels binned together the lower the resolution of that section of the imager. The binning is controlled by programming signals to the imager so that the resolution can be changed within a frame or between frames. The resolution can be controlled by a computer processor or by an operator. Feedback of the output of the imager can be used to determine the resolution of various sections of the imager.

## Description

### Technical field

This invention relates to a variable resolution imager which can have different resolution for different sections of an image and can vary the resolution of the entire imager within a frame exposure time.

### Background art

U.S. Pat. No. 5,452,109 to Compton describes a CCD imager signal processor which is dynamically controlled on a pixel-by-pixel and line-by-line basis to vary the imaging resolution and format of the imaging process.

U.S. Pat. No. 4,554,585 to Carlson describes a diffusing surface variably spaced from an imager and situated in the path of the projected image light to cause greater blurring in lower resolution regions of the imager than in higher resolution regions of the imager. The cutoff spatial frequency varies continually in accordance with the variable resolution of the system.

### Summary of the invention

Imagers receive an input signal, such as light energy, from an image; such as an object, photograph, or the like; to be decoded and translated into an output signal. The output signal can then be fed to a display unit and the image can be displayed. In many cases the input signal representing the image which is received by the imager is very non uniform. As an example, if the imager is being used to form an output signal of an object or scene wherein parts of the object or scene are relatively brightly illuminated and other parts of the object or scene have very low illumination parts of the imager may saturate while other parts receive insufficient illumination. It may be desirable for other reasons to use different resolution for different parts of an object or scene.

It is a principle objective of this invention to provide a method of forming an image signal from an imager which can have different resolution for different parts of a scene.

It is another principle objective of this invention to provide a method of forming an image signal from an imager which can have different resolution for the entire imager within a frame exposure time.

It is another principle objective of this invention to provide a variable resolution imager which can have different resolution for different parts of a scene.

It is another principle objective of this invention to provide to provide a variable resolution imager which can have different resolution for the entire imager within a frame exposure time.

These objectives are achieved using an imager having pixels which can be binned together to form groups of pixels and thereby achieve variable resolution. Binning a number of pixels together produces larger effective pixels which provide lower resolution. The more pixels binned together the lower the resolution. Using the pixels in the imager as individual pixels provides the highest resolution that the imager can provide. The resolution of the imager can be set prior to a frame and changed for different frames. The resolution of the imager can also be changed within a frame providing different resolution for different parts of a frame image.

### Description of the drawings

Fig. 1A shows a cross section view of a part of an imager showing two pixels formed in a silicon substrate.
Fig. 1B shows a diagram of four individuals binned together into a single, lower resolution pixel.
Fig. 1C shows a cross section view of a part of an imager showing two pixels formed in a silicon substrate showing a method of binning pixels.
Fig. 2 shows a diagram of an imager having a number of individual pixels forming a high resolution imager.
Fig. 3 shows a diagram of an imager having individual pixels binned together in groups of four pixels forming a lower resolution imager.
Fig. 4 shows a diagram of an imager having variable resolution in different parts of the imager.
Fig. 5 shows a diagram of an imager having three levels of resolution in different parts of the imager.
Fig. 6 shows block diagram of a pixel having operator or processor inputs and an output to a detection unit.

### Description of the preferred embodiments

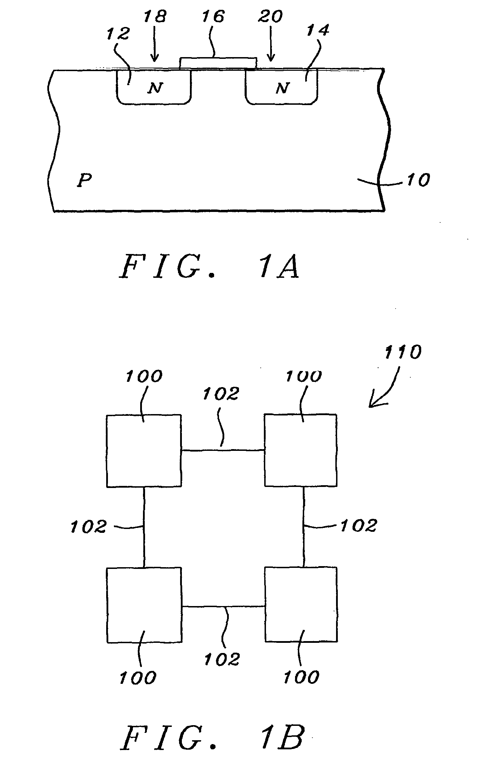

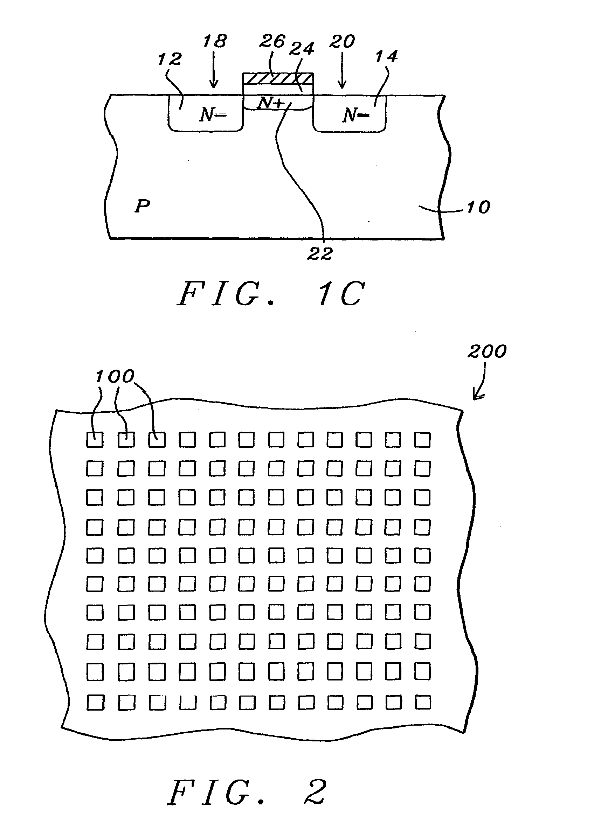

Refer now to Figs. 1-6 of the Drawings for a description of the preferred embodiments of the method and imager of this invention. Fig. 1A shows a cross section of a part of an imager showing a first pixel 18 and a second pixel 20 formed in a P type silicon substrate. In this example, the first pixel 18 comprises a first N well 12 formed in the substrate 10 and the second pixel 20 comprises a second N well 14 formed in the substrate 10. During the charge integration period of the imager charge is accumulated at the PN junction between the first N well 12 and the P type substrate and the PN junction between the second N well 14 and the P- type substrate. If the two N wells are binned together by means of an electrical connection 16 between the first N well 12 and the second N well 14, the first N well 12 and the second N well 14 will have the same potential, the charge will be equally shared between the first N well 12 and the second N well 14, the first pixel 18 and the second pixel act as a single pixel, the signal produced by the combined pixel will be due to the incident light averaged over the combined pixels during an integration period, and the resolution of the effective pixel formed by the combined pixels will be reduced. In this manner the resolution of combined pixels in the imager can be varied by binning groups of individual pixels together. The binning of the groups of pixels can be during a frame or between frames. The pixel combinations with reduced resolution will have reduced noise because the pixels are binned together. The noise reduction varies directly with the number of pixels binned together. The resolution varies inversely with the number of pixels binned together.

Fig. 1B shows an example of four pixels 100 binned together by electrical connections 102 to form a combined pixel 110. Fig. 1C shows the cross section view of the part of an imager shown in Fig. 1A showing an example of a programmable electrical connection used to bin pixels together. In this example, shown in Fig. 1C, a first N- well 12 and a second N⁻ well are formed in a P⁻ type substrate 10. A N⁺ region 22 is formed in the P⁻ substrate 10 between the first N⁻ well 12 and the second N⁻ well 14. A gate oxide 24 is formed over the N⁺ region 22 and a gate electrode 26 is formed over the gate oxide 24. The first N- well 12, the N⁺ region 22, and the second N⁻ well 14 then form an N channel FET which can be turned on or off to either bin the two pixels together or to isolate the two pixels. This binning method allows programmable binning of selected pixels so that the resolution can be changed by programming signals to the imager. The resolution of the imager can be changed within a frame or between frames as desired. This binning method is explained in European Patent Application n° 04 368 002.4 , entitled "APS PIXEL WITH RESET NOISE SUPRESSION AND PROGRAMMABLE BINNING CAPABILITY" by Taner Dosluoglu, Filed January 8, 2004 which is incorporated herein by reference.

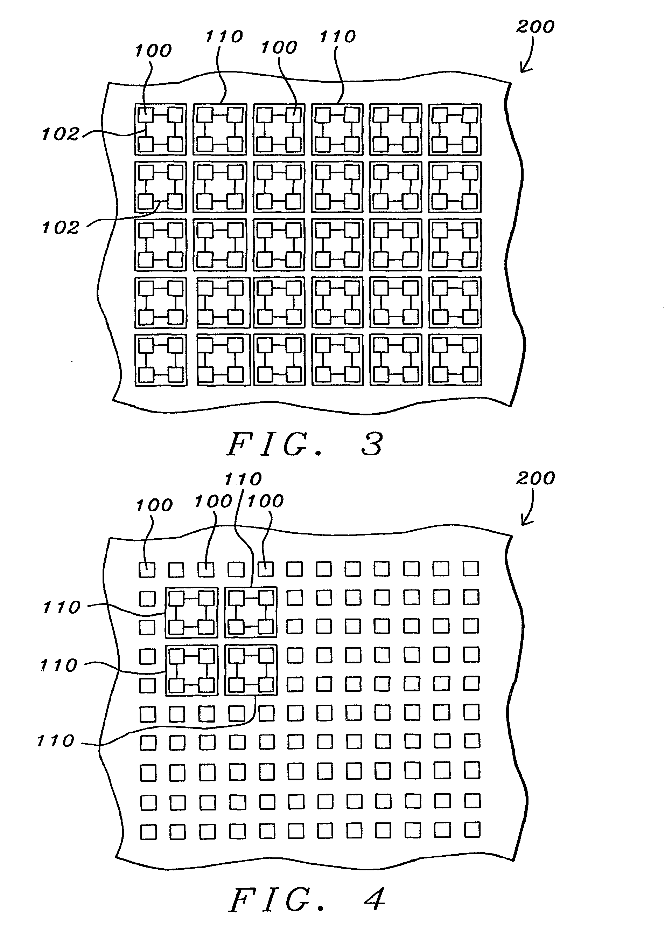

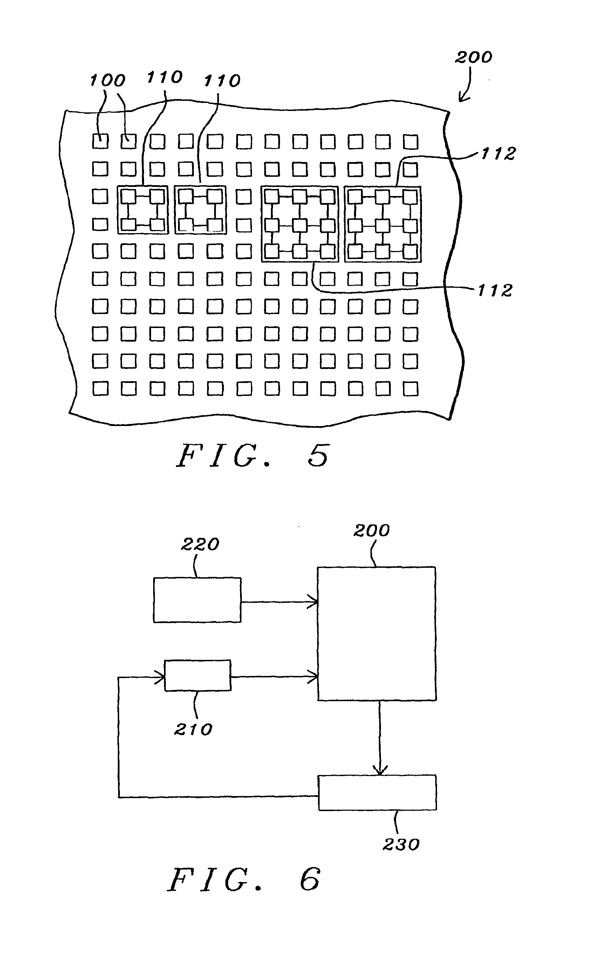

Fig. 2 shows an imager 200 having an array of individual pixels 100, thereby providing the maximum resolution of the imager 200. Fig. 3 shows an imager 200 where the individual pixels 100 are binned together in groups of four pixels using the binning connections 102 to form a number of combined pixels 110. The imager 200 in Fig. 3 will have lower resolution than the imager 200 in Fig. 2. Fig. 4 shows an imager 200 having individual pixels 100 for highest resolution and pixels binned together in groups of four pixels 110 for lower resolution sections. Fig. 5 shows an imager 200 with more than two levels of resolution. The imager in Fig. 5 shows individual pixels 100 in a part of the imager, first extended pixels 110 having groups of four individual pixels, and second extended pixels 112 having groups of nine pixels. The resolution of the imager can be changed at desired locations of the imager to provide an imager output signal having the desired resolution at selected parts of a scene. Some reasons for varying the resolution of imager at desired locations of a scene are to compensate for wide variations in illumination of objects in a scene, to improve the signal to noise ratio of an imager, to overcome the limitations of chip speed and achieve higher frame rates with variable resolution.

The binning, and thus the resolution of the imager, can be controlled by means such as a computer processor or by an operator. Fig. 6 shows a block diagram showing a processor 210 or an operator 220 input to an imager 200 with the output of the imager going to a detection unit 230. The resolution of the imager can comprise several levels of resolution, can be changed within a frame, and can be changed between frames. As shown in the block diagram of Fig. 6, signals from the detection unit can be fed back to the processor 210 so image features; such as illumination level, desired signal to noise ratio, motion of an object in an image, interest in particular sections of an image, or the like; of various sections of the image can be used to determine the resolution of the various sections of the imager. The resolution of highly illuminated sections of the imager can be increased to avoid saturation in those regions of the imager. The resolution of sections of the imager can be reduced to improve the signal to noise ratio, since binning a number of pixels together reduces the noise of the effective pixel formed by the combined pixels.

The variable resolution imager can be used to avoid saturation effects in scenes with highly variable illumination level, more closely observe motion in a section of a scene, or more closely observe sections of a scene of particular interest. The variable resolution imager can achieve variable resolution at higher frame rates since the resolution can be changed within a frame or on a frame by frame basis without the need of extensive image processing. The variable resolution imager can improve the signal to noise ratio of the imager since binning pixels together reduces the noise of the combined pixels.

For the operation of the variable resolution imager refer to Fig. 6. First a number of pixels are selected to make up a frame. The number of pixels in the frame can be all of the pixels available in the imager or a selected number of these pixels. The resolution of the imager is determined by either the operator 220 or the computer processor 210. The resolution of the imager can be varied within the frame or can be changed between frames. The imager determines the image signals and sends these signals to the detection unit 230. Feedback from the detection unit 230 to the processor 210 can be used to adjust the resolution of the imager.

The pixels of this invention have been described N or N- type silicon wells formed in a P or P⁻ type silicon substrate. In one example N⁺ type silicon regions are formed in a P⁻ type substrate for binning connections. Those skilled in the art will readily recognize that the invention will work equally well if N regions are replaced by P regions, N regions replaced by P regions, N⁻ regions replaced by P⁻ regions, P⁻ regions replaced by N⁻ regions, N⁺ regions replaced by P⁺ regions, and P⁺ regions replaced by N⁺ regions.

## Claims

1. A method of forming variable resolution image signals in an imager, comprising:
- providing a number of pixels, wherein each of said pixels provide an output signal related to the amount of light illuminating that said pixel during an integration period;
- forming a frame of some or all of said number of pixels;
- binning one or more groups of said pixels in said frame together so that said frame comprises individual pixels and one or more groups of said pixels, wherein each of said groups of said pixels provides an output signal related to the amount of light illuminating the pixels in that group of pixels during said integration period, thereby providing different resolution for different sections of the imager within said frame; and
- forming an image signal by reading out said individual pixels and said groups of pixels in said frame.

2. The method of claim 1 wherein said frame is made up of a number of lines, each of said lines comprising individual pixels, groups of pixels binned together, or both individual pixels and groups of said pixels binned together and said frame is read out one line at a time.

3. The method of claim 1 further comprising a computer processor, wherein said processor controls which of said pixels are binned together to form groups of said pixels.

4. The method of claim 1 wherein those regions of said frame having higher resolution receive greater illumination than those regions of said frame having lower resolution.

5. The method of claim 1 wherein said image signal represents an image and the resolution for different sections of the imager is chosen based on features of said image.

6. The method of claim 1 wherein said binning one or more groups of said pixels in said frame together is accomplished prior to said integration period.

7. The method of claim 1 wherein feedback of said image signal is used to determine the resolution for different sections of the imager.

8. A method of forming variable resolution image signals in an imager, comprising:
- providing a number of pixels, wherein each of said pixels provide an output signal related to the amount of light illuminating that said pixel during an integration period;
- forming a frame of some or all of said number of pixels;
- binning groups of said pixels in said frame together so that said frame comprises said groups of said pixels binned together, wherein each of said groups of said pixels provides an output signal related to the amount of light illuminating the pixels in that group of pixels during said integration period and the resolution of the imager is determined by the number of pixels binned together into each group; and
- forming an image signal by reading out said individual pixels and said groups of pixels in said frame.

9. The method of claim 8 wherein said frame is made up of a number of lines, each of said lines comprises said groups of said pixels binned together, and said frame is read out one line at a time.

10. The method of claim 1 or 8 wherein each of said groups of said pixels provides an output signal related to the average amount of light illuminating the pixels in that group of pixels during said integration period.

11. The method of claim 8 further comprising a processor, wherein said processor controls which of said pixels are binned together to form said groups of said pixels and thereby controls the resolution of the imager.

12. The method of claim 8 wherein the resolution of the imager is controlled by an operator during operation of the imager.

13. The method of claim 8 wherein the number of pixels in each of said groups of said pixels in the same.

14. The method of claim 8 wherein said binning groups of said second number of pixels in said frame together is accomplished prior to said integration period.

15. The method of claim 8 wherein feedback of said image signal is used to determine the resolution of the imager.

16. The method of claim 8 wherein said image signal represents an image and the size of said groups of pixels binned together is chosen based on features of said image.

17. A variable resolution imager, comprising:
- a number of pixels, wherein each of said pixels provide an output signal related to the amount of light illuminating that said pixel during an integration period;
- a frame of some or all of said number of pixels wherein;
- one or more groups of said pixels in said frame binned together so that said frame comprises individual pixels and one or more groups of said pixels, wherein each of said groups of said pixels provides an output signal related to the amount of light illuminating the pixels in that group of pixels during said integration period, thereby providing different resolution for different sections of the imager within said frame; and
- an image signal formed by reading out said individual pixels and said groups of pixels in said frame.

18. The variable resolution imager of claim 17 wherein said frame is made up of a number of lines, each of said lines comprises individual pixels, groups of pixels binned together, or both individual pixels and groups of said pixels binned together and said frame is read out one line at a time.

19. The variable resolution imager of claim 17 further comprising a processor, wherein said processor controls which of said pixels are binned together to form groups of said pixels.

20. The variable resolution imager of claim 17 wherein those regions of said frame having higher resolution receive greater illumination than those regions of said frame having lower resolution.

21. The method of claim 17 wherein said image signal represents an image and the resolution for different sections of the imager is chosen based on features of said image.

22. The variable resolution imager of claim 17 wherein said binning one or more groups of said pixels in said frame together is accomplished prior to said integration period.

23. The variable resolution imager of claim 17 wherein feedback of said image signal is used to determine the resolution for different sections of the imager within said frame.

24. A variable resolution imager, comprising:
- a number of pixels, wherein each of said pixels provide an output signal related to the amount of light illuminating that said pixel during an integration period;
- a frame of some or all of said number of pixels;
- groups of said pixels in said frame binned together so that said frame comprises said groups of said pixels binned together, wherein each of said groups of said pixels provides an output signal related to the amount of light illuminating the pixels in that group of pixels during said integration period and the resolution of the imager is determined by the number of pixels binned together into each group; and
- an image signal formed by reading out said individual pixels and said groups of pixels in said frame.

25. The variable resolution imager of claim 24 wherein said frame is made up of a number of lines, each of said lines comprises said groups of said pixels binned together, and said frame is read out one line at a time.

26. The variable resolution imager of claim 17 or 24 wherein each of said groups of said pixels provides an output signal related to the average amount of light illuminating the pixels in that group of pixels during said integration period .

27. The variable resolution imager of claim 24 further comprising a processor, wherein said processor controls which of said pixels are binned together to form said groups of said pixels and thereby controls the resolution of the imager.

28. The variable resolution imager of claim 24 wherein the resolution of the imager is controlled by an operator during operation of the imager.

29. The variable resolution imager of claim 24 wherein the number of pixels in each of said groups of said pixels in the same.

30. The variable resolution imager of claim 24 wherein said binning groups of said second number of pixels in said frame together is accomplished prior to said integration period.

31. The variable resolution imager of claim 24 wherein feedback of said image signal is used to determine the resolution of the imager.

32. The method of claim 24 wherein said image signal represents an image and the size of said groups of pixels binned together is chosen based on features of said image.
